(19) Europäisches Patentamt
European Patent Office
Office européen des brevets

(11) **EP 2 487 350 A1**

(12) **EUROPÄISCHE PATENTANMELDUNG**

(43) Veröffentlichungstag:
**15.08.2012 Patentblatt 2012/33**

(51) Int Cl.:
*F02C 9/28* (2006.01)          *G05B 23/02* (2006.01)

(21) Anmeldenummer: **11154149.6**

(22) Anmeldetag: **11.02.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **SIEMENS AKTIENGESELLSCHAFT
80333 München (DE)**

(72) Erfinder: **Deuker, Eberhard, Dr.
45481 Mülheim an der Ruhr (DE)**

(54)     **Verfahren zur Regelung einer Gasturbine**

(57)     Die Erfindung beschreibt ein Verfahren zur Regelung einer Gasturbine, wobei Messsignalwerte ($M_{n1}$, $M_{n2}$) zu verschiedenen Zeitpunkten ($n1$, $n2$), nämlich zu zumindest einem ersten Zeitpunkt ($n1$) und einem zweiten Zeitpunkt ($n2$) gemessen werden, wobei der erste Zeitpunkt ($n1$) vor dem zweiten Zeitpunkt ($n2$) liegt und wobei gedämpfte Signalwerte ($S_{n1}$, $S_{n2}$) aus den Messsignalwerten ($M_{n1}$, $M_{n2}$) generiert werden, indem die gemessenen Messsignalwerte ($M_{n1}$, $M_{n2}$) einer Glättung mit einem Dämpfungsfaktor ($\lambda$) unterzogen werden, wobei abhängig von der Differenz des Messsignalwertes ($M_{n2}$) zum zweiten Zeitpunkt ($n2$) und des gedämpften Signalwertes ($S_{n1}$) zum ersten Zeitpunkt ($n1$) ein unterschiedlicher Dämpfungsfaktor ($\lambda$) herangezogen wird.

EP 2 487 350 A1

## EP 2 487 350 A1

**Beschreibung**

Die Erfindung betrifft ein Verfahren zur Regelung einer Gasturbine, wobei Messsignalwerte zu verschiedenen Zeitpunkten, nämlich zu zumindest einem ersten Zeitpunkt und einem zweiten Zeitpunkt gemessen werden, wobei der erste Zeitpunkt vor dem zweiten Zeitpunkt liegt und wobei gedämpfte Signalwerte aus den Messsignalwerten generiert werden, indem die gemessenen Messsignalwerte einer Glättung mit einem Dämpfungsfaktor unterzogen werden.

Eine Gasturbine ist eine Strömungsmaschine, die in der Regel einen Verdichter, eine Turbine und einen Brennkammerabschnitt umfasst. Im Verdichter wird angesaugte Umgebungsluft verdichtet und die verdichtete Luft schließlich dem Brennkammerabschnitt zugeführt. Im Brennkammerabschnitt ist wenigstens eine Brennkammer mit zumeist mehreren Brennern angeordnet, denen die verdichtete Luft zugeführt wird. Neben der verdichteten Luft wird den Brennern außerdem ein Brennstoff zugeführt, der mit der Luft vermischt und verbrannt wird. Die dabei in der Brennkammer entstehenden heißen Verbrennungsabgase werden der Turbine zugeführt, wo sie entspannen und abkühlen und dabei die Turbine in Rotation versetzen. Auf diese Weise wird die thermische Energie der Verbrennungsabgase in mechanische Arbeit umgewandelt, die einerseits zum Antreiben des Verdichters und andererseits zum Antreiben eines Verbrauchers, beispielsweise eines Generators zum Erzeugen von Strom eingesetzt wird.

Bei der Verbrennung in der Brennkammer ist darauf zu achten, dass eine stabile Flamme vorliegt. Instabilitäten der Flamme treten insbesondere aufgrund von resonanten Verbrennungsschwingungen im Verbrennungsabgas auf und können einerseits zu einem erhöhten Schadstoffausstoß führen und andererseits Schwingungen und Vibrationen der Brennkammer verursachen, welche die Lebensdauer der Brennkammer herabsetzen und Wartungsintervalle verkürzen.

Die Verbrennungsstabilität von Gasturbinen und anderen Feuerungsanlagen wird in der Regel anhand von zeitlich stark fluktuierenden Messsignalen beurteilt. Dies können beispielsweise Messsignale durch Beschleunigungs- oder Druckamplitudenmessung an der Brennkammer sein. Um nicht erwünschte hochfrequente Anteile zu unterdrücken, werden die Messsignale üblicherweise gedämpft. Jedoch treten in bestimmten Zeitabständen immer wieder Spitzen, nachfolgend als Peaks bezeichnet, im Höhenverlauf der Messung auf. Dies kann auch als 3Lattenzaun"-Verlauf bezeichnet werden. Zwischen den Peaks sinkt die Höhe auf einen völlig unkritischen Wert. Ein einzelner Peak ist auch noch unkritisch. Wiederholen sich die Peaks aber, und nimmt entweder die Höhe der Peaks zu oder die Aufeinanderfolge der Peaks wird dichter, so deutet dies auf eine beginnende Instabilität hin.

Bisher werden zur Regelung meistens sogenannte Spitzenhaltewerte-Signale, auch Peakhold-Signale genannt, verwendet. Dabei wird für einen definierten Zeitraum nur die maximal aufgetretene Höhe als Signalwert weitergegeben. Dieses Signal liefert aber keine Information über die Wiederholfrequenz der Peaks. Ist das Zeitfenster groß, so wird der Regelung ein kritischer, hoher Amplitudenwert übermittelt, obwohl unter Umständen nur ein einzelner, ungefährlicher Peak vorhanden war. Ist das Zeitfenster sehr klein, so dass pro Zeitfenster maximal ein Peak zu erwarten ist, so wechseln hohe und niedrige Signale in rascher Folge, was zu einer unruhigen und oft sehr uneffizienten Regelung führt.

Aufgabe der Erfindung ist es, ein Verfahren zur Regelung einer Gasturbine anzugeben, welches die oben beschriebenen Nachteile vermeidet.

Erfindungsgemäß wird diese Aufgabe gelöst durch die Angabe eines Verfahrens zur Regelung einer Gasturbine, wobei Messsignalwerte zu verschiedenen Zeitpunkten, nämlich zu zumindest einem ersten Zeitpunkt und einem zweiten Zeitpunkt gemessen werden. Dabei liegt der erste Zeitpunkt vor dem zweiten Zeitpunkt. Es werden gedämpfte Signalwerte aus den Messsignalwerten generiert, indem die gemessenen Messsignalwerte einer Glättung mit einem Dämpfungsfaktor unterzogen werden. Abhängig von der Differenz des Messsignalwertes zum zweiten Zeitpunkt und des gedämpften Signalwertes zum ersten Zeitpunkt wird ein unterschiedlicher Dämpfungsfaktor herangezogen. Damit werden Signalwerte gebildet, welche sowohl auf die Amplitudenhöhe als auch auf die Wiederholfrequenz der Peaks reagieren. Damit ist eine effiziente Regelung möglich.

Vorteilhafte Weiterbildungen der Erfindung sind in den abhängigen Ansprüchen definiert.

Vorteilhafterweise ist die Glättung eine exponentielle Glättung. Damit können besonders gut Zeitreihenwerte geglättet werden, welche keine Systematik erkennen lassen.

Vorteilhafterweise wird der gedämpfte Signalwert aus der Summe zweier Produkte gebildet, wobei das erste Produkt die Multiplikation des Dämpfungsfaktors mit dem zu dem zweiten Zeitpunkt gemessenen Messsignalwert ist und das zweite Produkt die Multiplikation des Differenzwertes eins minus dem Dämpfungsfaktor mit dem gedämpften Signalwert zu dem ersten Zeitpunkt ist. Diese ist besonders einfach zu realisieren.

In besonders bevorzugter Ausgestaltung wird ein höherer Dämpfungsfaktor (=schwache Dämpfung) verwendet, wenn der zu dem zweiten Zeitpunkt gemessene Messsignalwert größer oder gleich dem gedämpften Signalwert zum ersten Zeitpunkt ist, als wenn der zu dem zweiten Zeitpunkt gemessene Messsignalwert kleiner dem gedämpften Signalwert zum ersten Zeitpunkt ist.

Ein plötzlich auftretender Peak sorgt im seinem Anstieg daher für eine schwache Dämpfung, das heißt der Dämpfungsfaktor ist hoch, so dass die gedämpften Signalwerte während des Peakanstiegs rasch ansteigen. Beim Abfall des Peaks wird ein Umschalten auf eine starke Dämpfung ausgelöst, das heißt der Dämpfungsfaktor ist niedrig. Die gedämpften Signalwerte fallen daher nur langsam ab.

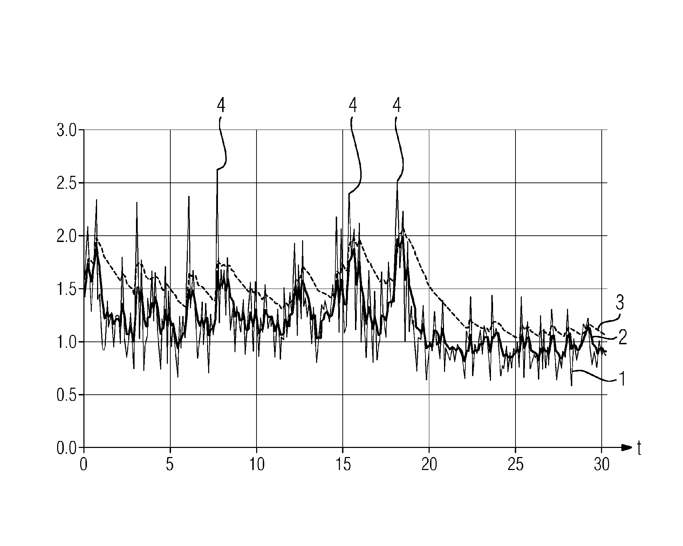

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

Die Figur zeigt ein Diagramm in welchem das Messsignal, der nach dem Stand der Technik gedämpfte Signalwert sowie der nach der Erfindung gedämpfte Signalwert über der Zeit t aufgetragen wurden.

Figur zeigt eine Kurve 1 mit Messsignalwerten, welche über die Zeit t auftragen wurde. Der Verlauf des Messsignals 1 weist Spitzen, nachfolgend als Peaks 4 bezeichnet, auf, die zunächst etwa alle zwei bis drei Sekunden auftreten. Messsignalwerte oberhalb von etwa 2.0 seien hier einmal als kritisch angesehen. Ist die Wiederholfrequenz dieser Peaks 4 entsprechend hoch, sollte ein Reglereingriff erfolgen. Zwischen der Zeit t=14 und der Zeit t=19 nimmt die Anzahl der Peaks 4 zu. Zur Zeit t=19 wurde eine Änderung des Betriebszustandes bewirkt. Die Kurve 1 mit den Messsignalwerten zeigt anschließend einen ausreichend ruhigen Verlauf.

In der Kurve 2 sind aus den Messsignalwerten der Kurve 1 nach dem Stand der Technik gedämpfte Signalwerte generiert worden, welche über die Zeit t auftragen wurden. Durch die Dämpfung nach dem Stand der Technik werden die hochfrequenten Anteile vermieden. Die Kurve 2 fällt jedoch zwischen den Peaks 4 immer wieder stark ab. Für die nach dem Stand der Technik gedämpften Signalwerte in Kurve 2 lässt sich jedoch kein Wert angeben, der eindeutig zwischen kritisch und nicht kritisch entscheidet: Werte zwischen 0.95 und 1.15 treten sowohl in der kritischen Phase bis zur Zeit t=19 als auch in der ruhigen Phase danach auf. Eine effiziente Regelung ist daher nicht möglich.

Die Kurve 3 wurde mit dem erfindungsgemäßen Verfahren erzeugt. Dabei werden Messsignalwerte $M_{n1}$, $M_{n2}$ zu verschiedenen Zeitpunkten n1,n2 nämlich zu zumindest einem ersten Zeitpunkt n1 und einem zweiten Zeitpunkt n2 gemessen, wobei der erste Zeitpunkt n1 vor dem zweiten Zeitpunkt n2 liegt. Die gemessenen Messsignalwerte $M_{n1}$ und $M_{n2}$ werden einer exponentiellen Glättung mit einem Dämpfungsfaktor $\lambda$ unterzogen. Dadurch werden Signalwert $S_{n1}$ und $S_{n2}$ generiert. Es wird dabei ein höherer Dämpfungsfaktor $\lambda$ verwendet, wenn der zu dem zweiten Zeitpunkt n2 gemessene Messsignalwert $M_{n2}$ größer oder gleich dem gedämpften Signalwert $S_{n1}$ zum ersten Zeitpunkt n1 ist, als wenn der zu dem zweiten Zeitpunkt n2 gemessene Messsignalwert $M_{n2}$ kleiner dem gedämpften Signalwert $S_{n1}$ zum ersten Zeitpunkt n1 ist.

Diese exponentielle Glättung wird durch nachfolgende Formel angegeben:

$$S_{n2} = \lambda_x * M_{n2} + (1 - \lambda_x) * S_{n1} \quad mit \quad x = 1,2$$

wobei gilt:

x=2 wenn $M_{n2} \geq S_{n1}$
x=1 wenn $M_{n2} < S_{n1}$
mit $\lambda_2 > \lambda_1$

Wobei $\lambda_x$, x=1,2 der Dämpfungsfaktor, $M_{n2}$ der gemessene Messsignalwert zum Zeitpunkt n2, $M_{n1}$ der gemessene Messsignalwert zum Zeitpunkt n1, $S_{n1}$ der gedämpfte Signalwert zum Zeitpunkt n1 und $S_{n2}$ der gedämpfte Signalwert zum Zeitpunkt n1 ist.

Bei den erfindungsgemäß gedämpften Signalwerten im Ausführungsbeispiel wurde beispielhaft $\lambda_2$ =0,3 und $\lambda_1$=0.05 gewählt. Nach einem Peak 4 fällt ein erfindungsgemäß gedämpfter Signalwert in Kurve 3 wesentlich langsamer ab als dies bei einem Signalwert in Kurve 2, der nach einem Verfahren des Stands der Technik gedämpft wurde, der Fall ist. Dies führt dazu, dass bei dem zeitlich darauffolgenden Peak 4 der erfindungsgemäß gedämpfte Signalwert höhere Werte erreicht als der nach dem Stand der Technik gedämpfte Signalwert. Dies ist ein für Regelungszwecke oft ein gewünschter Effekt. Zwischen der Zeit t=14 und der Zeit t=19 nimmt die Frequenz der Peaks 4 zu. Hier ist zu beobachten, dass die erfindungsgemäß gedämpften Signalwerte in diesem sehr kritischen Zeitfenster oberhalb von 1.5 bleiben, während die nach dem Stand der Technik gedämpften Signalwerte in Kurve 2 noch einmal auf fast 1.0 abfallen. Die erfindungsgemäß gedämpften Signalwerte hingegen fallen in der kritischen Zeit zwischen t=0 und t= 19 nie unter 1.3 und steigt anschließend in der unkritischen Zeit nie über 1.16. Ein plötzlich auftretender Peak 4 sorgt im seinem Anstieg daher für eine schwache Dämpfung, das heißt der Dämpfungsfaktor $\lambda$ ist hoch und die gedämpften Signalwerte werden während des Peakanstiegs daher rasch ansteigen. Bei dem Abfall des Peaks 4 wird ein Umschalten auf eine starke Dämpfung ausgelöst, das heißt der Dämpfungsfaktor $\lambda$ ist niedrig. Die gedämpften Signalwerte fallen daher nur langsam ab.

Mit dem erfindungsgemäßen Verfahren kann also eine effiziente Regelung einer Gasturbine bewerkstelligt werden, die sowohl schnell auf einen Peak reagiert (durch Umschalten auf schwache Dämpfung), aber auch eine rasche Aufeinanderfolge von Peaks kritischer bewertet als vereinzelte Peaks.

**Patentansprüche**

1. Verfahren zur Regelung einer Gasturbine, wobei Messsignalwerte ($M_{n1}$, $M_{n2}$) zu verschiedenen Zeitpunkten (n1, n2) , nämlich zu zumindest einem ersten Zeitpunkt (n1) und einem zweiten Zeitpunkt (n2) gemessen werden, wobei der erste Zeitpunkt (n1) vor dem zweiten Zeitpunkt (n2) liegt und wobei gedämpfte Signalwerte ($S_{n1}$, $S_{n2}$) aus den Messsignalwerten ($M_{n1}$, $M_{n2}$) generiert werden, indem die gemessenen Messsignalwerte ($M_{n1}$, $M_{n2}$) einer Glättung mit einem Dämpfungsfaktor ($\lambda$) unterzogen werden,
**dadurch gekennzeichnet, dass** abhängig von der Differenz des Messsignalwertes ($M_{n2}$) zum zweiten Zeitpunkt (n2) und des gedämpften Signalwertes ($S_{n1}$) zum ersten Zeitpunkt (n1) ein unterschiedlicher Dämpfungsfaktor ($\lambda$) zur Regelung herangezogen wird.

2. Verfahren zur Regelung nach Anspruch 1,
**dadurch gekennzeichnet, dass** die Glättung eine exponentielle Glättung ist.

3. Verfahren zur Regelung nach Anspruch 2,
**dadurch gekennzeichne**t, dass der gedämpfte Signalwert ($S_{n2}$) aus der Summe zweier Produkte (P1) und (P2) gebildet wird, wobei das erste Produkt (P1) die Multiplikation des Dämpfungsfaktors ($\lambda$) mit dem zu dem zweiten Zeitpunkt (n2) gemessenen Messsignalwert ($M_{n2}$) ist und das zweite Produkt (P2) die Multiplikation des Differenzwertes eins minus dem Dämpfungsfaktor ($\lambda$) mit dem gedämpften Signalwert ($S_{n1}$) zu dem ersten Zeitpunkt (n1) ist.

4. Verfahren zur Regelung nach einem der vorhergehenden Ansprüche,
**dadurch gekennzeichnet, dass** ein höherer Dämpfungsfaktor ($\lambda$) herangezogen wird, wenn der zu dem zweiten Zeitpunkt (n2) gemessene Messsignalwert ($M_{n2}$) größer oder gleich dem gedämpften Signalwert ($S_{n1}$) zum ersten Zeitpunkt (n1) ist, als wenn der zu dem zweiten Zeitpunkt (n2) gemessene Messsignalwert ($M_{n2}$) kleiner dem gedämpften Signalwert ($S_{n1}$) zum ersten Zeitpunkt (n1) ist.

Europäisches
Patentamt

European
Patent Office

Office européen
des brevets

# EUROPÄISCHER RECHERCHENBERICHT

Nummer der Anmeldung

EP 11 15 4149

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | E GARDNERJR: "Exponential smoothing: The state of the art-Part II", INTERNATIONAL JOURNAL OF FORECASTING, Bd. 22, Nr. 4, 1. Oktober 2006 (2006-10-01), Seiten 637-666, XP55002644, ISSN: 0169-2070, DOI: 10.1016/j.ijforecast.2006.03.005 * Seite 653, Spalte 1, Absatz 1 - Seite 654, Spalte 1, Absatz 1 * * Seite 640; Tabelle 1 * ----- | 1-4 | INV. F02C9/28 G05B23/02 |
| A | EP 1 926 001 A2 (UNITED TECHNOLOGIES CORP [US]) 28. Mai 2008 (2008-05-28) * Seite 4, Absatz 29 * ----- | 1-4 | |
| A | EP 1 643 332 A2 (UNITED TECHNOLOGIES CORP [US]) 5. April 2006 (2006-04-05) * das ganze Dokument * ----- | 1-4 | |
| | | | RECHERCHIERTE SACHGEBIETE (IPC) |
| | | | F02C G05B |

Der vorliegende Recherchenbericht wurde für alle Patentansprüche erstellt

| Recherchenort | Abschlußdatum der Recherche | Prüfer |
|---|---|---|
| München | 10. August 2011 | Rau, Guido |

EPO FORM 1503 03.82 (P04C03)

**EP 2 487 350 A1**

**ANHANG ZUM EUROPÄISCHEN RECHERCHENBERICHT**
**ÜBER DIE EUROPÄISCHE PATENTANMELDUNG NR.**

EP 11 15 4149

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 1926001 | A2 | 28-05-2008 | US | 2008120074 A1 | 22-05-2008 |
| EP 1643332 | A2 | 05-04-2006 | JP | 2006105142 A | 20-04-2006 |
| | | | US | 2008097662 A1 | 24-04-2008 |

EPO FORM P0461

Für nähere Einzelheiten zu diesem Anhang : siehe Amtsblatt des Europäischen Patentamts, Nr.12/82

7